# EUROPEAN PATENT APPLICATION

(11) **EP 0 680 811 A1**
(43) Date of publication of application: **08.11.1995**
(21) Application number: 95500060.9
(22) Date of filing: 26.04.1995
(51) Int. Cl.: B28B 1/44

(54) **Process for deep drawing of ceramic and/or metallic dusts for the fabrication of green compacts for later sintering**

(30) Priority: 27.04.1994 ES 9400885
(71) Applicant: INDUSTRIAS QUIMICAS DEL URUMEA, S.A., 20120 Hernani (Guipuzcoa) (ES)
(72) Inventor: Echeverria Pascual, Jose Maria, E-20120 Hernani (Guipuzcoa) (ES); Iglesias Hernandez, Luis, E-20120 Hernani (Guipuzcoa) (ES); Urkola Galarza, Jose Javier, E-20400 Tolosa (ES); Castro Fernandez, Francisco, E-20009 Donostia (ES); Jauregui Etxebeste, Sebastian, E-20003 Donostia (ES); Gonzalez Lopez, Eva, E-20017 Donostia (ES)
(74) Representative: Carpintero Lopez, Francisco

(57) **Abstract**

The process consists in the drawing of a mixture of ceramic and/or metallic dusts and a thermostable organic vehicle, through the application of a single axis pressure, that causes the viscose mixture prepared to flow in the inverse direction to that on which pressure is applied, filling up the mold, which shape determines the geometry of the compact formed.

## Description

### OBJECT OF THE INVENTION

This invention refers, as expressed in this patent specification, to a process for the fabrication of green compacts of various shapes for later sintering through deep drawing of ceramic and/or metal dusts containing a thermostable or thermoplastic organic vehicle, and since it does not use a dust injection feeder, it does not produce raised edges on the parts and, accordingly, it does not require a later part machining process.

### BACKGROUND OF THE INVENTION

Within the green compact production processes of the type mentioned herewith, are found, for instance, injection molding, extrusion and dust forging, all of them containing a given quantity and very varied organic vehicle types. Out of these, the process nearer to that being the object of this invention and specifically focused towards the production of uniform wall and constant thickness components (as observed in figures 4 and 5), is injection molding, described, for example in patents E-89303356, US-5015294 or EP-419757. This process has the disadvantage that it requires a mixture feeder; which at the end of the process leaves a raised edge on the final part, which needs then be taken out after the sintering process. Said machining process does not only makes the product more expensive but may also introduce defects in the component that may degrade its final mechanical properties. Particularly, if the component is made up of ceramic dusts (such as, for example, SiC, Si₃N₄, etc.) or metallic (such as self-hardening steels) or a combination of them (WC cermet) given that these materials are particularly tough and hard to machine, requiring at times the use of diamond tipped tools with the resultant increase in its final price plus the investment of a greater amount of time for its manufacturing.

The process described herewith avoids all of those problems due to directly obtaining the green compacts without raised edge, given that a feeder is no longer required, thus achieving an improvement of the end product and a less expensive mass production process.

### DESCRIPTION OF THE INVENTION

In accordance with this invention, a compacting process for the obtention of green compacts made up of a mixture of dusts (ceramic, metal, or a combination of both) and a thermostable organic vehicle, subsequently subjected to a sintering process is hereby proposed.

The dust drawing process, according to proposed process, is carried out under the application of a single axis pressure at a temperature at which the organic vehicle is liquid. This operation is effected so that the liquid-solid mixture, of a given viscosity, flows in the direction opposite that in which mechanical pressure is being applied to fill up the mold, which shape does furthermore determine the geometry of the compact thus produced. At the end of the process and due to the properties of the thermostable vehicle, the mixture hardens up, allowing an easy extraction of the green component mold.

Said green component constitutes the starting point for the fabrication of a final component through a later sintering process, which within the dust methodology is common to all the processes seeking the fabrication of dense parts, that is to say, free of residual porosity.

According to the process described, the full initial mixture is introduced in the mold prior to its drawing, eliminating therefore the need to inject the mixture through an injector, thus avoiding the formation of sinkheads or injection points and, therefore, the need to effect a later machining procedure to eliminate them.

### DESCRIPTION OF THE DRAWINGS

In order to complement the description being made and so as to permit a better understanding of the characteristics of the invention, this patent specification is accompanied by a set of drawing on which the following has been represented, with a merely illustrative but not limitative character:

Figure 1.- Shows schematically the mold with the full dust and resin mixture before starting the drawing process.

Figure 2.- Shows schematically the actuation of the pressing piston and the effect that it produces upon the mixture when it is at molding temperature.

Figure 3.- Shows schematically the shape acquired by the mixture, after withdrawing the pressing piston.

Figure 4.- Shows schematically a hollow wall cylindric part made using the described procedure.

Figure 5.- Shows schematically a hollow wall conical trunk part made using the described procedure.

### PREFERRED EMBODIMENT OF THE INVENTION

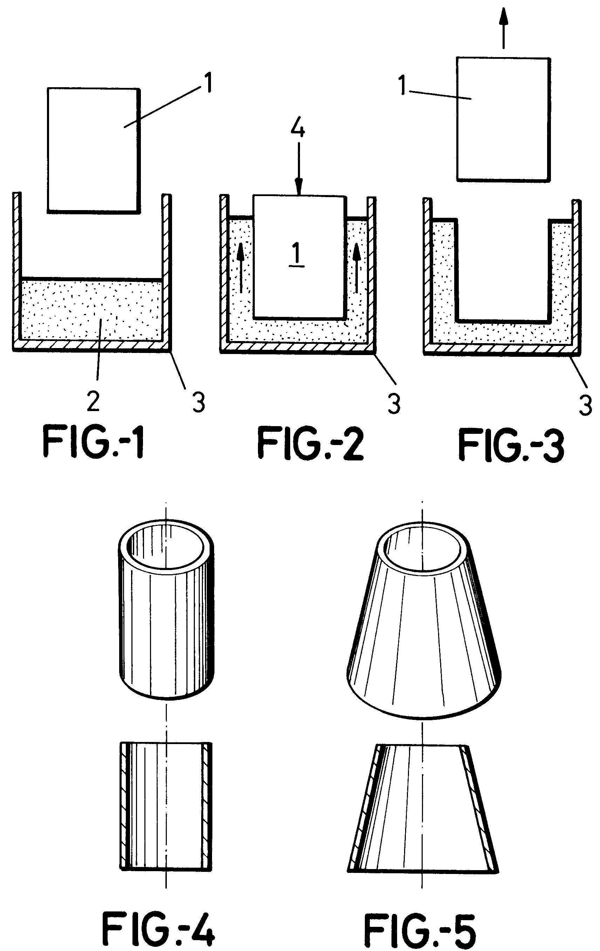

On watching the figures it may be observed that the procedure object of the invention is made up of several stages and, more specifically:
a) Preparation of the mixture formed by the thermostable vehicle and the ceramic and/or metal dusts. The preparation of this mixture is effected in a mill with the thermostable vehicle in dissolution to which a solid load is added (ceramic and/or metal dusts) in given proportions so as to achieve the proper degree of viscosity that would allow keeping a fluid mixture at the compacting temperatures. Generally, the thermostable vehicle in said mixture is not greater than 40% of the total by volume.
b) A given amount of the previously described mixture (2) is then introduced into a single axis press (1), in the mold which geometry determines the compact shape, and then is applied a pressure (4) sufficient to cause the mixture to flow in the direction opposite that from which said pressure is being applied, as observed in figure 2, which takes place when the mixture reaches molding temperature, which generally oscillates between 80° and 150°C, depending on the relative quantities between dusts and organic vehicle, as well as on the type of dusts used and the chemical composition of the thermostable vehicle.
c) Upon taken off the pressure (figure 3) the green compact, which degrees of hardness is sufficient for later handling, is then removed.
d) In order to obtain a residual porosity solid component (which shape is determined by the green compact shape as previously described) a sintering treatment is now effected, prior to which the organic vehicle should be extracted, given to the fact that the ceramic and/or metal dust sintering temperatures are much greater than those at which the organic vehicle undergoes thermal decomposition.
e) The green compact obtained after the elimination of the organic vehicle is then subjected to a sintering treatment at a given temperature and during a specific time period so as to induce the required level of density.

## Claims

**1.-** Process for the fabrication of green compacts through deep drawing of ceramic and/or metallic dusts containing a given quantity of thermostable vehicle, characterized in that the drawing of the dusts is carried out under the application of single axis pressure at a temperature at which the organic vehicle is liquid, being carried out so that the liquid-solid mixture does, due to its specific viscosity, flow in the direction opposite that of mold filling mechanical pressure, forming a compact that, reproducing the geometry of said mold, may then be taken out of the mold as the resulting mixture hardens.

**2.-** Process according to the first claim, characterized in that the drawing process molding temperature depends both on the relative quantity by volume of the thermostable vehicle with respect to the dust load, and on the chemical composition of the thermostable vehicle.
